# FASCICULE DE BREVET EUROPEEN

(11) **EP 1 103 904 B1**
(45) Date de publication et mention de la délivrance du brevet: **08.01.2003**
(21) Numéro de dépôt: 00403207.4
(22) Date de dépôt: 16.11.2000
(51) Int. Cl.: G06F 15/02, H04B 1/08

(54) **Agenda électronique comportant un récepteur de radiodiffusion et procédé d'utilisation**
Elektronisches Tagebuch mit einem Rundfunkempfänger und Verwendungsverfahren
Electronic diary comprising a broadcast receiver and method of use

(30) Priorité: 23.11.1999 FR 9914963
(43) Date de publication de la demande: 30.05.2001
(73) Titulaire: SAGEM S.A., 75015 Paris (FR)
(72) Inventeur: Charbonnier, Philippe, 78600 Le Mesnil le Roi (FR)
(74) Mandataire: Schmit, Christian Norbert Marie

(56) Documents cités:
- EP-A- 0 833 455
- US-A- 5 778 325
- US-A- 5 929 774
- PATENT ABSTRACTS OF JAPAN vol. 016, no. 241 (P-1363), 3 juin 1992 (1992-06-03) & JP 04 052751 A (SHIGEKICHI ISHIKAWA), 20 février 1992 (1992-02-20)

## Description

L'invention à pour objet un agenda électronique comportant un récepteur de radiodiffusion et un procédé d'utilisation. Le domaine de l'invention est en général celui des appareils électroniques portables d'usage courant. Ces appareils sont peu encombrants, ils se transportent facilement dans un sac ou dans une poche. Ils comportent des moyens de diffusion d'informations, qu'ils produisent ou comportent, que ces moyens de diffusion soient visuels ou acoustiques. Ils comportent aussi des moyens pour les commander. Ces moyens pour les commander sont accessibles à l'utilisateur par une interface homme machine. En particulier le domaine de l'invention est celui des agendas électroniques ou organiseurs électroniques.

Le but de l'invention est d'intégrer dans un même appareil deux fonctionnalités d'usage courant même lorsque l'on est hors de son domicile. L'interface de l'appareil devient dès lors commune aux deux fonctionnalités, ce qui permet de le réaliser au moindre coup.

Dans l'état de la technique on connaît des agendas électroniques portables. Ces agendas ont en commun une vaste mémoire de stockage d'informations concernant des personnes et des rendez-vous. Ils comportent de plus un écran et un clavier. Ces agendas sont conçus pour que l'on puisse à partir du clavier visualiser sur l'écran les informations contenues dans la mémoire de stockage. En plus de la visualisation il est aussi possible bien sûr de mettre à jour ces informations.

Ces agendas électroniques sont aussi dotés de fonction de rappel. Pour mettre en oeuvre ces fonctions ils comportent une horloge et un haut-parleur. Lorsque l'utilisateur d'un tel appareil souhaite que lui soit rappelée une action qu'il doit effectuer, il programme l'agenda électronique afin que celui-ci émette, à l'heure à laquelle-doit être effectuée l'action, un son. Ces sons sont en général des bips ou des mélodies pré-programmées du type des sonneries de téléphone. L'agenda électronique peut dès lors aussi servir de réveil matin lorsque son utilisateur est en déplacement en dehors de son domicile. Il n'est cependant pas très agréable de se faire réveiller par une mélodie de synthèse. Mais il est aussi encombrant de voyager avec plusieurs appareils électroniques.

Dans l'état de la technique on connaît aussi des baladeurs qui sont dotés de possibilités de réception de radiodiffusion. Ces baladeurs comportent alors leurs propres moyens pour paramétrer des circuits de réception de radiodiffusion, et traiter les signaux qui en sont issus. Certains modèles de baladeurs haut de gamme comportent une horloge, ce qui permet d'avoir une fonction de radio réveil sur le baladeur. Cependant, bien qu'il s'agisse d'appareils haut de gamme, l'interface pour programmer cette fonction radio réveil est limitée. De plus, les baladeurs ne sont pas prévus pour faire de la diffusion acoustique atmosphérique. En général ils restituent les sons uniquement par l'intermédiaire d'un casque. Pour utiliser cette fonction de radio réveil à plein rendement il faut donc prévoir des enceintes extérieures au baladeur. Cela augmente l'encombrement du dispositif lorsque l'on souhaite s'en servir comme d'un radio réveil.

Dans l'état de la technique, on connaît enfin des réveils de voyage. Cependant ces réveils sont rarement dotés de fonctionnalités radio ou offrent une interface de programmation limitée. A l'heure actuelle, si l'on souhaite se déplacer avec un agenda, un réveil et une radio il faut donc trois appareils. On peut éventuellement réduire ce nombre à deux, mais dans ce cas l'appareil qui cumule deux fonctionnalités n'a pas l'interface adéquate pour utiliser la fonctionnalité pour laquelle il n'a pas été prévu au départ. On a donc un problème d'ergonomie auquel vient s'ajouter un problème de coût. En effet ces appareils ont un grand nombre de moyens en commun. Parmi ces moyens on peut notamment citer un écran, un clavier même réduit, et une batterie. Il faut pourtant multiplier ces moyens si l'on souhaite emporter ces trois appareils.

US-A-5 929 774 (CHARLTON NORMAN J) 27 juillet 1999 (1999-07-27) divulgue un appareil comportant un agenda électronique et une radio. Ces deux fonctions sont comprises dans une unité de base et sont indissociables. La possibilité d'inclure des boîtiers d'option détachables de l'unité de base n'est pas envisagée.
La notion de boitier d'option est divulguée dans EP-A-0 833 455 (NOKIA MOBILE PHONES LTD) 1 avril 1998 (1998-04-01) qui décrit un téléphone portable comportant une unité de base et des unités accessoires amovibles (boitiers d'antenne, boitiers vibreurs). L'unité amovible ne fournit pas une nouvelle fonction à l'appareil mais améliore la fonction téléphone.

L'invention résout ces problèmes en intégrant dans un même appareil électronique des circuits de commande gérant une mémoire d'agenda, et des circuits de réception de radiodiffusion, ces derniers étant contenus dans un boîtier d'option détachable. Les circuits de réception de radiodiffusion sont alors commandés par un programme contenus dans les mémoires des circuits de commandes. Les circuits de commandes et les circuits de radiodiffusion partagent la batterie de l'appareil, ainsi que son écran et son clavier. Les circuits de réception de radiodiffusion peuvent être compris dans un boîtier de batterie de l'appareil. Dans ce cas le boîtier de batterie est amovible. L'appareil peut alors être connecté à plusieurs types de boîtiers de batterie. On peut ainsi obtenir un appareil dont la seule fonction est d'être un agenda, ou un appareil dont la fonction est d'être un agenda et un récepteur de radiodiffusion.

L'appareil selon l'invention comporte aussi un haut-parleur. Ce haut-parleur sert à diffuser des alarmes issues de la gestion de l'agenda, ou des programmes radio issus du récepteur de radiodiffusion. Cependant il est aussi prévu que sera branché sur l'appareil un casque. Ainsi l'utilisateur de l'appareil peut écouter la radio sans déranger ses voisins.

L'invention à pour objet un agenda électronique comportant un corps muni de premiers circuits de commande produisant des premiers signaux électriques, des deuxièmes circuits d'émission acoustique pour produire des deuxièmes signaux acoustiques correspondant aux premiers signaux électriques, des troisièmes circuits récepteurs radioélectriques produisant des troisièmes signaux électriques, et des moyens pour partager les circuits d'émission acoustiques afin qu'ils puissent traiter les premiers signaux électriques issus des circuits de commande et les troisièmes signaux électriques issus des circuits récepteurs radioélectriques, les troisièmes circuits étant contenus dans un boîtier d'option détachable adjoint à l'agenda.

L'invention a également pour objet un procédé d'utilisation d'un tel agenda dans lequel on traite de manière prioritaire les premiers signaux électriques.

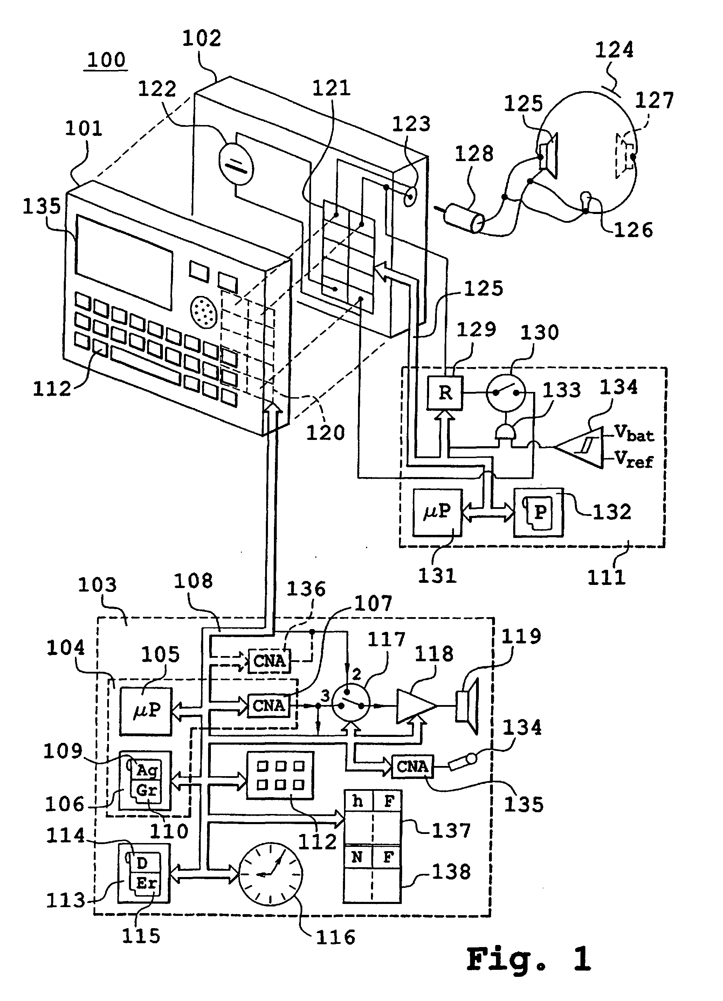

L'invention sera mieux comprise à la lecture de la description qui suit et à l'examen de la figure qui l'accompagne. Celles-ci ne sont présentées qu'à titre indicatif et nullement limitatif de l'invention. La figure 1 unique montre une illustration des moyens mis en oeuvre dans un appareil selon l'invention.

La figure 1 montre un l'appareil 100 selon l'invention. L'appareil 100 comporte un corps 101 et un boîtier 102 de batterie. Dans la pratique le corps 101 et le boîtier 102 peuvent très bien être confondus. Dans ce cas la batterie de l'appareil 100 est constituée par des piles par exemple. Dans ce cas toujours il est entendu que tout ce qui va être placé dans le boîtier 102 est alors contenu dans le corps 101. Le fait d'avoir placé des éléments dans le boîtier 102 de batterie se justifie par le souhait d'obtenir un appareil modulaire. En effet suivant le coût, ou l'emploi que l'utilisateur souhaite avoir de son appareil, l'utilisateur peut doter son appareil d'un boîtier de batterie ou d'un boîtier plus évolué, au choix. De même dans une variante le boîtier 102 peut très bien ne pas contenir de batterie. En effet la batterie peut être contenue dans le corps 101, le boîtier 102 étant dès lors réduit à un boîtier d'options contenant la fonction que l'utilisateur souhaite adjoindre au corps 101.

Le corps 101 comporte des moyens 103 pour réaliser sa fonction d'agenda. Les moyens 103 comporte des circuits 104 de commande produisant des premiers signaux électriques. Les circuits 104 sont un microprocesseurs 105, une mémoire 106 de programme et un convertisseur numérique analogique 107. Les éléments 105 à 107 sont connectés entre eux par un bus 108. Le bus 108 véhicule tous les signaux nécessaires au fonctionnement de l'appareil 100. Parmi ces signaux on trouve des signaux de commandes, des signaux de données et des signaux d'adressages. Les données circulant sur le bus 108 peuvent être analogiques ou numériques, les signaux de données incluant des données numériques (typiquement au format série) et des données analogiques (typiquement le signal audio sur un fil). La mémoire 106 de programme comporte au moins deux zones. La première zone 109 comporte des codes instructions pour assurer la fonctionnalité d'agenda, et une deuxième zone 110 pour la gestion de moyens 111 de réception de radiodiffusion. Chacune des zones 109 et 110 comporte des codes instructions qui sont lus et exécutés par le microprocesseur 105.

Lors de son fonctionnement en mode agenda, le microprocesseur 105 est commandé par les codes instructions contenus dans la zone 109. Les moyens 103 comportent aussi un clavier 112 connecté au bus 108. L'utilisateur de l'appareil 100 transmet ses ordres, ou mises à jour, par l'intermédiaire du clavier 112. Il peut ainsi lire ou mettre à jour le contenu d'une mémoire 113 connectée au bus 108. La mémoire 113 comporte une zone 114 de données et une zone 115 d'événements. Dans la zone de données sont stockées, par exemple, les noms, adresses et différents renseignements que l'utilisateur souhaite conserver sur ses contacts ou amis. Dans la zone 115 sont stockées les événements dont l'utilisateur souhaite se souvenir. Les moyens 103 comportent un circuit 116 d'horloge connectée au bus 108. Le microprocesseur 105 scrute régulièrement le contenu de la zone 115 de mémoire en comparant les dates qui sont stockées à la date fournie par le circuit 116 d'horloge. Si le microprocesseur trouve un événement qui correspond à la date fournie par le circuit 116, le microprocesseur 105 envoie des informations au convertisseur 107, afin que le convertisseur 107 produise des premiers signaux électriques.

Le convertisseur 107 est connecté à un commutateur 117. D'autre part le commutateur 117 est connecté à un amplificateur 118 lui-même connecté à un haut-parleur 119. Le commutateur 117 et l'amplificateur 118 sont connectés au bus 108. Il est ainsi possible au microprocesseur de commander le commutateur 117 ainsi que le gain de l'amplificateur 118. En plus d'avoir envoyé un message au convertisseur 107, le microprocesseur 105 a donc commuté le commutateur 117 de manière à ce que celui-ci transmette des signaux issus du convertisseur 107 à l'amplificateur 118. Il s'agit de la position 1 du commutateur 117. Ainsi le haut-parleur 119 va diffuser un signal sonore, ou deuxième signal acoustique, indiquant à l'utilisateur de l'appareil 100 que la date d'un événement stocké dans la zone 115 de mémoire vient d'être atteinte. L'utilisateur de l'appareil 100 peut alors utiliser le clavier 112 pour consulter son agenda, c'est à dire le contenu de la zone 109 de mémoire, et rechercher de quel événement il s'agit.

Le volume du son émit par le haut-parleur 119 est réglable par l'intermédiaire du clavier 112. Le niveau courant du volume de diffusion sonore est stocké dans une mémoire non représentée. Cette mémoire est sauvegardée même lorsque l'appareil est éteint.

Le corps 101 comporte aussi sur son dos un connecteur 120. Le dos de l'appareil 100 est sa face qui est opposée à celle comportant l'écran. En règle générale le connecteur 120 est situé sur la face destinée à recevoir le boîtier 102. Ce connecteur 120 est connecté au bus 108. Le boîtier 102 comporte un connecteur 121. Lorsque le corps 101 et le boîtier 102 sont emboîté, par des moyens non représentés, les connecteurs 120 et 121 sont en contact. Dans la pratique la connexion réalisée à l'aide des connecteurs 120 et 121 prolonge le bus 108 et permet aussi d'alimenter le corps 101. A cet effet le boîtier 102 comporte une batterie 122 connectée au connecteur 121.

Le connecteur 121 est donc connecté à la batterie 122, à un port 123 femelle destinée à être branché sur un casque 124. Le connecteur 121 est aussi connecté à un bus 125 qui connecte le connecteur 121 et les moyens 111. Le casque 124 comporte un haut-parleur, un écouteur 125, un microphone 126, ainsi que de préférence un deuxième écouteur haut-parleur 127. Le microphone 126 est optionnel et peut servir à enregistrer des données vocales. Par extension on utilisera le terme de casque même quand il n'y a qu'un seul écouteur. Le haut-parleur 125 et le microphone 126 sont connectés en parallèle à un jack 128 qui est prévu pour s'enficher dans le corps femelle 123. Lorsque le casque 124 est connecté au boîtier 102, il reçoit les signaux issus du convertisseur 107. Lorsque le casque 124 comporte deux haut-parleurs 125 et 127, on peut avoir un branchement de type stéréo. Ce branchement en parallèle comporte deux connexions au jack 128. Il s'effectue de manière connue.

Les moyens 111 comportent un circuit 129 de réception et démodulation de signaux de radiodiffusion. Ce circuit 129 est connecté à l'un des fils issus du port 123. Ainsi lorsque le casque 124 est connecté au boîtier 102, les fils qui relient le casque au connecteur 123 servent d'antenne, ce qui permet d'améliorer la qualité de la réception de la radiodiffusion. Le circuit 129 est d'autre part connecté au bus 125 et à un interrupteur 130. Le circuit 129 reçoit par l'intermédiaire du bus 125 son paramétrage et place sur des fils du bus 125 des signaux qu'il produit, c'est à dire des troisièmes signaux électriques. Les moyens 111 comportent aussi un microprocesseur 131 et une mémoire 132 de programme. Les circuits 131 et 132 sont connecté au bus 125. Dans la pratique circuits 129, 131 et 132 sont intégrés dans un seul et même circuit intégré. Ils ont été représentés ici de manière éclatée afin de faciliter la compréhension de l'invention. Le circuit 131 est en effet commandé par des codes contenus dans le circuit 132. Le circuit 131 permet notamment de produire des signaux d'accompagnements (de type RDS) issus des signaux de radiodiffusion reçus par le circuit 129. Le circuit 129 est alimenté via l'interrupteur 130. L'interrupteur 130 est connecté à une porte 133. La porte 133 est une porte ET. Une entrée de la porte 133 est connectée au bus 125. La porte 133 permet à l'utilisateur de l'appareil 102 de commander la mise sous tension, donc l'emploi, du circuit 129. Cette porte 133 permet aussi une mise hors tension quand le circuit 129 n'est pas utilisé, dans le but de minimiser la consommation électrique. Une autre entrée de la porte 133 est connectée à un comparateur 134. Des entrées du comparateur 134 sont une tension de référence et une tension issue de la batterie 122. Ainsi lorsque la tension de la batterie devient inférieure à la tension de référence, le circuit 129 n'est plus alimenté. Cela à pour but de réduire la consommation de l'appareil 100 lorsque la batterie est faible. En effet la priorité de l'appareil 100 est la sauvegarde des données contenues dans la mémoire 113. L'autre rôle du comparateur 134 est donc d'assurer que lorsque la batterie est faible cette priorité est bien suivie.

Le bus 125 véhicule des signaux issus du bus 108. Lorsque l'utilisateur de l'appareil 100 souhaite écouter la radio il utilise le clavier 112 pour programmer quelle station il souhaite écouter. Il visualise sa programmation via un écran 135 connecté au bus 108. Il peut ainsi faire défiler les fréquences dans la bande de fréquences qu'il a sélectionné. Cette sélection et cet affichage sont commandés par le microprocesseur 105. Une fois que la validation de la station est faite, via le clavier 112, le microprocesseur 105 envoi un ordre au circuit 129 via le bus 18 et le bus 125.

Il peut aussi y avoir des stations pré-programmées. Ces stations pré-programmées sont stockées dans une mémoire non représentées. L'accès à ces stations se fait alors par des touches prédéfinis du clavier 112. En effet le clavier 112 est celui d'un agenda, il est donc alphanumérique et comporte au moins 36 touches. Il n'est donc pas préjudiciable à l'emploi de l'appareil 100 d'affecter certaines de ses touches, lorsque l'appareil est en mode radio, à des stations pré-programmées. Cela signifie que lorsque l'utilisateur appuie sur une touche correspondant à une station préprogrammée, le microprocesseur 105 détecte cet appui. Puis le microprocesseur 105 lit dans une mémoire, correspondant à la touche ayant été appuyée, des informations de paramétrage du circuit 129. Le microprocesseur 105 utilise ces informations pour régler le circuit 129 afin qu'il capte les signaux radioélectrique correspondant à la station préprogrammée.

Si l'utilisateur n'utilise pas de casque lorsqu'il écoute la radio, le commutateur 117 est dans sa position 2. C'est à dire que le circuit 129 produits des signaux analogiques correspondant à la station sur laquelle il a été programmé. Il place ces signaux analogiques sur le bus 125. Ces signaux transitent alors par les connecteurs 121 et 120 puis par le bus 108 pour arriver au commutateur 117. Du commutateur 117 ces signaux analogiques sont alors amplifiés par l'amplificateur 118 puis diffusés par le haut-parleur 119. Si au cours de cette écoute la date d'un événement stocké dans la mémoire 115 survient, le microprocesseur 105 commute le commutateur 117 dans sa position 1 et émet un signal sonore indiquant à l'utilisateur l'échéance de cet événement. Puis une fois cette diffusion sonore effectuée, le microprocesseur 105 replace le commutateur dans sa position 2 afin que l'utilisateur puisse continuer à écouter la radio.

Si l'utilisateur utilise le casque 124, l'utilisateur peut alors choisir de placer le commutateur 117 dans une position 3. Dans cette position 3 plus aucun signal ne parvient à l'amplificateur 118. La seule diffusion acoustique qui soit alors mise en oeuvre est celle effectuée par le haut-parleur 125.

Lorsque le casque 124 est branché sur l'appareil 100, les signaux issus du récepteur 129 ou du convertisseur 107 sont dirigés vers les haut-parleurs du casque 124. Dans ce cas il se peut que l'utilisateur de l'appareil 100 ne souhaite pas que les signaux issus du convertisseur 107 soient aussi dirigés vers le haut-parleur 119. Pour cette raison le commutateur 117 comporte une troisième position, la position 3. Dans cette position aucun signal n'est redirigé vers le haut-parleur 119. Ainsi l'utilisateur de l'appareil 100 peut écouter la radio dans le casque 124 sans déranger son entourage. De même la sortie du convertisseur 107 est connectée au bus 108. Ainsi les signaux issus du convertisseur 107 arrive directement sur le casque 124, via le bus 108 le connecteur 120, 121 et le jack 123. Si une alarme se produit alors que le casque est branché, le microprocesseur 105 va commander l'interruption de l'activité du récepteur 129. Ainsi l'utilisateur de l'appareil 100 qui a le casque 124 sur les oreilles n'entendra que le signal sonore issu du convertisseur 107 lui indiquant l'alarme. Puis une fois ce signal sonore émit le microprocesseur 105 remettra le récepteur 129 en activité normale. Cette suspension d'activité du circuit 129 est possible grâce à la porte 133 commandant l'interrupteur 130.

Les moyens 103 comportent aussi un microphone 134 connecté à un convertisseur analogique numérique 135 lui-même connecté au bus 108. Le microphone134 permet à l'utilisateur de l'appareil 100 de donner des ordres à cet appareil. Pour la même raison le casque 124 comporte un microphone126. Les ordres vocaux peuvent donc être donnés à l'appareil 100 soit par le microphone134 soit, lorsque le casque 124 est branché, par le microphone126.

Dans une variante de l'invention les moyens 103 comportent un convertisseur 136 analogique numérique. Le convertisseur 136 est branché entre les signaux issus du récepteur 129 et le bus 108. Ainsi le microprocesseur 124 peut récupérer sur le convertisseur 136 des échantillons correspondants à des sons de radiodiffusion. Dès lors il peut traiter ces sons et par exemple les retransmettre directement au convertisseur 107 afin que celui-ci les retransforme en signaux analogiques qui pourront être diffusés par le haut-parleur 119. L'intérêt du convertisseur 136 est de permettre au microprocesseur d'effectuer un mixage numérique entre les sons prévus pour signaler les alarmes à l'utilisateur et les émissions de radios reçus par l'appareil 100. Dans une autre variante de l'invention ce mixage peut se faire par simple superposition des signaux analogique correspondant aux alarmes et à l'émission de radiodiffusion reçue par l'appareil 100.

Les moyens 103 comportent aussi deux mémoires 137 et 138 connectées au bus 108. La mémoire 137 permet d'associer un horaire et une fréquence. Par horaire il faut comprendre heures de début et heures de fin, et par fréquence il faut comprendre paramètre de réglage du récepteur 129. Ainsi l'utilisateur de l'appareil 100, en programmant la mémoire 137, peut choisir d'écouter automatiquement certaines fréquences durant certaines plages horaires. La mémoire 138 associe un nom et une fréquence. La mémoire 138 est utile notamment pour l'affectation des fréquences pré-programmées. Ainsi lorsque l'utilisateur de l'appareil 100 appuie sur une touche correspondant à une station pré-programmée c'est le nom de la station qui va s'afficher. De même lorsque l'utilisateur remplit la mémoire 137, si la fréquence est associée à un nom dans la mémoire 138, c'est le nom de la station qui va s'afficher lors du remplissage de la mémoire 137.

Le récepteur est aussi capable de recevoir des messages d'accompagnements, ou messages RDS. Les signaux correspondants à ces messages sont reçus par le récepteur 129 et traité par le microprocesseur 131 qui est alors commandé par les codes d'instructions contenus dans la mémoire 132. Une fois traités ces messages sont mis à disposition du microprocesseur 105 via le bus 125, le connecteur 121 et le bus 108. Le microprocesseur 105 peut alors afficher ses messages sur l'écran 135. Ces messages comprennent notamment le nom de la station sur lequel est accordé le récepteur 129 ainsi que les messages que diffuse cette station. Cependant la norme RDS a aussi été prévue pour effectuer ses fonctions de messagerie aussi connues sous le nom de paging. De part sa capacité mémoire importante et ces moyens d'affichage, l'appareil 100 est capable de gérer cette fonction de messagerie. En effet elle est actuellement peu utilisée car les systèmes RDS sont surtout mis en oeuvre sur des autoradios ou sur des récepteurs de radiodiffusion de salon. Il n'est donc pas facile de se promener avec son récepteur de salon ou son auto radio branché. Dans le cas de l'appareil 100 cette fonctionnalité devient tout à fait intéressante.

## Revendications

1. Agenda électronique comportant un corps muni de premiers circuits de commande produisant des premiers signaux électriques, des deuxièmes circuits d'émission acoustique pour produire des deuxièmes signaux acoustiques correspondant aux premiers signaux électriques, des troisièmes circuits récepteurs radioélectriques, de signaux de radiodiffusion, produisant des troisièmes signaux électriques, et des moyens pour partager les circuits d'émission acoustiques afin qu'ils puissent traiter les premiers signaux électriques issus des circuits de commande et les troisièmes signaux électriques issus des circuits récepteurs radoélectriques, **caractérisé en ce que** les troisièmes circuits sont contenus dans un boîtier d'option détachable adjoint à l'agenda.

2. Agenda selon la revendication 1, **caractérisé en ce qu'**il comporte un boîtier amovible de batterie muni des circuits récepteurs radioélectriques produisant les troisièmes signaux électriques

3. Agenda selon l'une des revendications 1 à 2, **caractérisé en ce qu'**il comporte un casque écouteur, avec ou sans microphone et ou haut-parleur raccordé, par un câble aux circuits récepteurs radioélectriques, de préférence par un connecteur.

4. Agenda selon la revendication 3, **caractérisé en ce que** le casque est un casque microphone et haut-parleur raccordé par un câble à deux connexions aux premiers et troisièmes circuits, une première connexion du câble étant reliée en commun à une première borne d'un haut-parleur, et à une première borne d'un microphone, une deuxième connexion étant raccordée à une deuxième borne du haut-parleur et à une deuxième borne du microphone.

5. Agenda selon l'une des revendications 3 à 4, **caractérisé en ce qu'**une antenne radioélectrique des troisièmes circuits est formée par le câble de raccordement du casque, ce câble de raccordement du casque étant relié à une entrée de signal d'un récepteur radioélectrique des troisièmes circuits de réception radioélectrique.

6. Agenda selon l'une des revendications 2 à 5, **caractérisé en ce qu'**il comporte dans une interface électrique entre le corps et le boîtier de batterie un connecteur dédié à ces troisièmes circuits.

7. Agenda selon l'une des revendications 1 à 6, **caractérisé en ce qu'**il comporte dans les troisièmes circuits de réception un décodeur de signaux d'accompagnement et un circuit de transmission de ces signaux d'accompagnement aux premiers circuits, et des moyens d'affichage d'indications correspondant à ces signaux d'accompagnement sur un écran de l'agenda.

8. Agenda selon l'une des revendications 1 à 7, **caractérisé en ce que** le corps comporte des circuits pour régler les troisièmes circuits récepteurs radioélectriques.

9. Agenda selon l'une des revendications 1 à 8, **caractérisé en ce que** les premiers circuits comportent des circuits pour agir sur les moyens de partage au moment de l'apparition d'une alarme produite par les premiers circuits.

10. Agenda selon l'une des revendications 1 à 9, **caractérisé en ce qu'**il comporte des circuits d'horloges pour planifier des alarmes dans le temps.

11. Agenda selon l'une des revendications 1 à 10, **caractérisé en ce qu'**il comporte des circuits mémoires, une alimentation électrique, et des circuits pour empêcher l'utilisation des troisièmes circuits de réception radioélectrique lorsque la puissance d'alimentation passe sous un seuil minimum.

12. Agenda selon l'une des revendications 1 à 11, **caractérisé en ce qu'**il comporte une mémoire pour enregistrer une paire horaire fréquence correspondant à uns station que l'on souhaite écouter à un horaire donné.

13. Procédé d'utilisation d'un agenda selon l'une des revendications 1 à 12, **caractérisé en ce que** l'on traite de manière prioritaire les premiers signaux électriques.

## Patentansprüche

1. Elektronischer Terminkalender, der einen Körper, der mit ersten Steuerschaltungen ausgestattet ist, die erste elektrische Signale erzeugen, zweite akustische Emissionsschaltungen, die zweite akustische Signale erzeugen, die den ersten elektrischen Signalen entsprechen, dritte funkelektrische Empfangsschaltungen von Rundfunksignalen, die dritte elektrische Signale erzeugen und Einrichtungen aufweist, die die akustischen Emissionsschaltungen aufteilen, damit diese die von den Steuerschaltungen ausgegebenen elektrischen Signale und die dritten von den funkelektrischen Empfangsschaltungen ausgegebenen elektrischen Signale verarbeiten können,
**dadurch gekennzeichnet, daß**
die dritten Schaltungen in einem abnehmbaren zusätzlichen Behälter angeordnet sind, der an dem Terminkalender angebracht ist.

2. Terminkalender nach Anspruch 1, **dadurch gekennzeichnet, daß** er ein abnehmbares Batteriegehäuse aufweist, das mit funkelektrischen Empfangsschaltungen ausgestattet ist, die die dritten elektrischen Signale erzeugen.

3. Terminkalender nach einem der Ansprüche 1 oder 2, **dadurch gekennzeichnet, daß** er einen Kopfhörer mit oder ohne Mikrophon und/oder einem Lautsprecher aufweist, der vorzugsweise durch einen Steckverbinder mit einem Kabel an die funkelektrischen Empfangsschaltungen angeschlossen ist.

4. Terminkalender nach Anspruch 3, **dadurch gekennzeichnet, daß** der Kopfhörer ein Mikrophonkopfhörer und Lautsprecher ist, der durch ein Kabel mit zwei Verbindungen an die ersten und dritten Schaltungen angeschlossen ist, wobei eine erste Verbindung des Kabels gemeinsam an einen ersten Anschluß eines Lautsprechers und an einen ersten Anschluß eines Mikrophons angeschlossen ist, wobei die zweite Verbindung mit einem zweiten Anschluß des Lautsprechers und einem zweiten Anschluß des Mikrophons verbunden ist.

5. Terminkalender nach einem der Ansprüche 3 und 4, **dadurch gekennzeichnet, daß** eine funkelektrische Antenne der drei Schaltungen aus einem Verbindungskabel mit dem Kopfhörer gebildet ist, wobei dieses Verbindungskabel mit dem Kopfhörer mit einem Signaleingang eines funkelektrischen Empfängers der dritten funkelektrischen Empfangsschaltungen verbunden ist.

6. Terminkalender nach einem der Ansprüche 2 bis 5, **dadurch gekennzeichnet, daß** er in einer elektrischen Schnittstelle zwischen dem Körper und dem Batteriegehäuse einen Steckverbinder für die dritten Schaltungen aufweist.

7. Terminkalender nach einem der Ansprüche 1 bis 6, **dadurch gekennzeichnet, daß** er in den dritten Empfangsschaltungen einen Decoder für Zusatzsignale und eine Übertragungsschaltung dieser Zusatzsignale an die ersten Schaltungen aufweist, sowie Anzeigeeinrichtungen für Hinweise, die den Zusatzsignalen auf einem Bildschirm des Terminkalenders entsprechen.

8. Terminkalender nach einem der Ansprüche 1 bis 7, **dadurch gekennzeichnet, daß** der Körper Schaltungen aufweist, um die dritten funkelektrischen Empfangsschaltungen zu steuern.

9. Terminkalender nach einem der Ansprüche 1 bis 8, **dadurch gekennzeichnet, daß** die ersten Schaltungen Schaltungen aufweisen, die auf die Aufteileinrichtungen in dem Moment einwirken, in dem ein durch die ersten Schaltungen erzeugter Alarm auftritt.

10. Terminkalender nach einem der Ansprüche 1 bis 9, **dadurch gekennzeichnet, daß** er Taktschaltungen aufweist, die die Alarme zeitmäßig planen.

11. Terminkalender nach einem der Ansprüche 1 bis 10, **dadurch gekennzeichnet, daß** er Speicherschaltungen, eine elektrische Versorgung und Schaltungen aufweist, die die Verwendung der dritten funkelektrischen Empfangssignale verhindern, wenn die Versorgungsspannung unter einen minimalen Grenzwert absinkt.

12. Terminkalender nach einem der Ansprüche 1 bis 11, **dadurch gekennzeichnet, daß** er einen Speicher aufweist, der ein Paar Stunde/Frequenz speichert, das einer Station entspricht, die man zu einer gegebenen Stunde hören will.

13. Verfahren zur Verwendung eines Terminkalenders nach einem der Ansprüche 1 bis 12, **dadurch gekennzeichnet, daß** die ersten elektrischen Signale mit Priorität behandelt werden.

## Claims

1. Electronic organizer including a body provided with first control circuits producing first electrical signals, second acoustic emission circuits to produce second acoustic signals corresponding to the first electrical signals, third radioelectric reception circuits of radio broadcasting signals, producing third electrical signals, and means to share the acoustic emission circuits so that they can process the first electrical signals from the control circuits and the third electrical signals from the radioelectric reception circuits, ***characterised by** the fact that* the third circuits are contained in an optional detachable case attached to the organizer.

2. Organizer as described in claim 1, ***characterised by** the fact that* it includes a detachable battery case provided with the radioelectric reception circuits producing the third electrical signals.

3. Organizer as described in one of claims 1 to 2, ***characterised by** the fact that* it includes headphones, with or without a microphone and or loud-speaker, connected by a cable to the radioelectric reception circuits, preferably by a connector.

4. Organizer as described in claim 3, ***characterised by** the fact that* the headphones are microphone and loud-speaker headphones connected by a cable to two connections to the first and third circuits, a first connection of the cable being connected in common to a first terminal of a loud-speaker and to a first terminal of a microphone, a second connection being connected to a second terminal of the loud-speaker and to a second terminal of the microphone.

5. Organizer as described in one of claims 3 to 4, ***characterised by** the fact that* a radioelectric antenna of the third circuits is formed by the connecting cable of the headphones, this connecting cable of the headphones being connected to a signal input of a radioelectric receiver of the third radioelectric reception circuits.

6. Organizer as described in one of claims 2 to 5, ***characterised by** the fact that* it includes in an electrical interface between the body and the battery case a connector dedicated to these third circuits.

7. Organizer as described in one of claims 1 to 6, ***characterised by** the fact that* it includes in the third reception circuits a decoder of accompanying signals and a circuit for transmission of these accompanying signals to the first circuits, and means for displaying indications corresponding to these accompanying signals on a screen of the organizer.

8. Organizer as described in one of claims 1 to 7, ***characterised by** the fact that* the body includes circuits to control the third radioelectric reception circuits.

9. Organizer as described in one of claims 1 to 8, ***characterised by** the fact that* the first circuits include circuits to act on the sharing means at the moment of appearance of an alarm produced by the first circuits.

10. Organizer as described in one of claims 1 to 9, ***characterised by** the fact that* it includes clock circuits to time-plan alarms.

11. Organizer as described in one of claims 1 to 10, ***characterised by** the fact that* it includes memory circuits, an electrical power supply, and circuits for preventing the use of the third radioelectric reception circuits when the supply power passes below a minimum threshold.

12. Organizer as described in one of claims 1 to 11, ***characterised by** the fact that* it includes a memory for storing a time frequency pair corresponding to a station required to be listened to at a given time.

13. Process for use of an organizer as described in one of claims 1 to 12, ***characterised by** the fact that* the first electrical signals are given processing priority.
